# EUROPEAN PATENT SPECIFICATION

(11) **EP 2 125 486 B1**
(45) Date of publication and mention of the grant of the patent: **29.12.2010**
(21) Application number: 07862608.2
(22) Date of filing: 06.12.2007
(51) Int. Cl.: B62D 1/06, B62D 7/22

(54) **STEERING WHEEL WITH REDUCED VIBRATION TRANSMISSION**
LENKRAD MIT REDUZIERTER SCHWINGUNGSÜBERTRAGUNG
VOLANT À TRANSMISSION DE VIBRATION RÉDUITE

(30) Priority: 12.12.2006 US 609494
(43) Date of publication of application: 02.12.2009
(73) Proprietor: Autoliv ASP, Inc., Ogden, UT 84405 (US)
(72) Inventor: MATSU, Richard L., Plymouth, MI 48170 (US); PATERCSAK, Patrick E., Davisburg, MI 48350 (US)
(74) Representative: Parry, Simon James
(86) International application number: PCT/US2007/025019
(87) International publication number: WO 2008/073279

(56) References cited:
- US-A1- 2003 233 905
- US-A1- 2005 229 740

## Description

### FIELD

The present teachings generally relate to a steering wheel for a motor vehicle, More particularly, the present teachings relate to a steering wheel for a motor vehicle that reduces the transmission of vehicle vibrations to the driver.

### INTRODUCTION

The statements in this section merely provide introduction information related to the present disclosure and may not constitute prior art.

Motor vehicles include various components that rotate, oscillate, and otherwise move in various directions. The movement of these components produces vibrations that can be transferred throughout the vehicle. The engine, for example, can be a source of significant vehicle vibrations. While it may be possible to reduce the vibrations of the engine by altering the RPMs (revolutions per minute) of the engine, for example, these alterations may adversely affect fuel economy or performance of the vehicle.

An additional source of vehicle vibration results from contact between the vehicle and the driving surface. A number of variables affect the vibrations generated by contact with the driving surface. For example, vehicle speed, aberrations in the driving surface, wheel alignment, and uneven tire wear can significantly impact the vibrations generated in the vehicle. To address this problem, a number of shock absorbing and damping systems have been developed to enhance the suspension systems of vehicles. Nevertheless, a need remains for further vibration control.

US Patent applications 2005/0229740 and 2003/0233905 both disclose steering wheels comprising the features defined in the preamble of claim 1. Said steering wheels are provided with inserts to increase the mass moment of inertia of the steering wheel.

### SUMMARY

According to the present invention, there is provided a steering wheel for a vehicle comprising a rim defining a perimeter of the steering wheel, and a weighted member positioned proximate to and at least partially surrounding the rim. The weighted member increases the polar moment of inertia of the steering wheel and is flexible in a direction generally perpendicular to a plane defined by the perimeter of the steering wheel.

Further areas of applicability of the present teachings will become apparent from the description and appended claims provided hereinafter. It should be understood that the detailed description and specific examples, while indicating the various examples of the present teachings, are intended for purposes of illustration only and are not intended to limit the scope of the teachings.

### DRAWINGS

The present teachings will become more fully understood from the detailed description, the appended claims and the following drawings.

Figures 1 is a perspective view of a steering wheel operatively associated with an exemplary motor vehicle in accordance with the present teachings with the steering wheel being shown partially cut-away for purposes of illustration.

Figure 2 is an enlarged front view of the steering wheel of Figure 1 with the steering wheel again being shown partially cut-away.

Figure 3 is a cross-sectional view taken along the line 3-3 of Figure 2

Figure 4 is a front view of a frame of the steering wheel in accordance with the present teachings.

### DESCRIPTION OF VARIOUS ASPECTS

The following description is merely exemplary in nature and is not intended to limit the present disclosure. It will be understood that corresponding reference numerals indicate like or corresponding parts and features throughout the drawings. The description and any specific examples, while indicating embodiments of the present disclosure, are intended for purposes of illustration only and are not intended to limit the scope of the present disclosure.

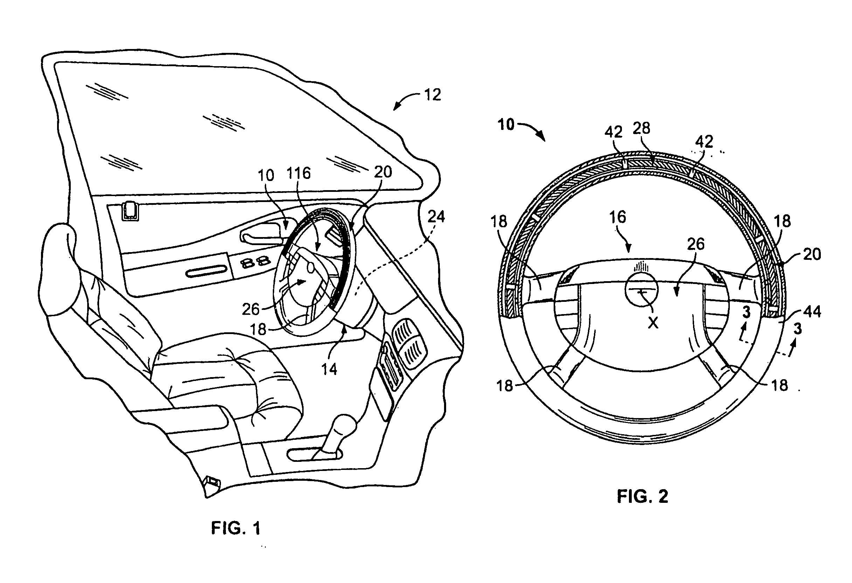

With general reference to Figures 1 through 4 of the drawings, a steering wheel in accordance with the present teachings is generally identified at reference character 10. In Figure 1, the steering wheel 10 is shown operatively associated with a motor vehicle 12. The particular motor vehicle 12 shown in the drawings will be understood to be exemplary in nature. In this regard, the present teachings have application to various other motor vehicles. The steering wheel 10 may be conventionally coupled to a steering column 14, which may in turn, be coupled to wheels (not shown) of the vehicle 12 such that rotation of the steering wheel 10 results in redirection of the wheels of the vehicle 12.

The steering wheel 10 may generally include a central member 16, a series of spokes 18, and an outer rim 20. The central member 16 may include a hub 22 that connects the steering wheel 10 to a rotatable portion 24 of the steering column 14. The hub 22 may include at least one of a series of splines (not shown) or a keyed aperture 23 that fixes the steering column 10 for rotation with the rotatable portion 24 of the steering column 14. The central member 16 may also include various instruments and components such as a horn, driver's side airbag, stereo controls, and cruise control buttons, schematically represented by reference number 26 (see, e.g., Figures 1 and 2).

The spokes 18 extend generally from the central member 16 and connect the central member 16 to the rim 20. The spokes 18 may be integrally formed with the central member 16 and/or rim 20 by a suitable manufacturing process such as casting. Alternatively, the spokes 18 may be separately formed from the central member 16 and/or rim 20 and fixedly attached to the central member 16 and/or rim 20 by a weld and/or a mechanical fastener. While the spokes 18 are described as connecting the rim 20 to the central member 16, the central member 16 may alternatively radially extend and engage the outer rim 20 or may be integrated formed with the outer rim 20.

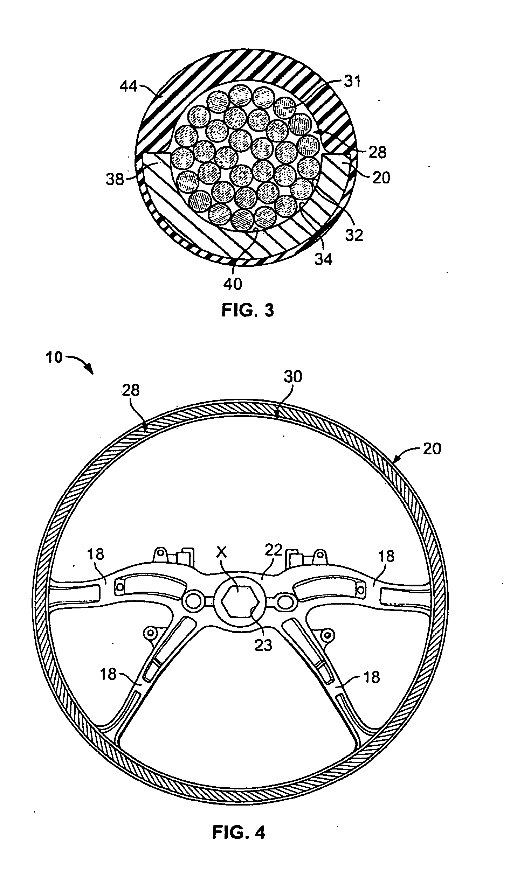

With particular reference to Figures 3 and 4, the rim 20 axially surrounds the central member 16 and the spokes 18 and defines a perimeter of the steering wheel 10. In this regard, at least a portion of the perimeter of the steering wheel is defined by the rim 20. The rim 20 may extend completely around the central member 16 and the spokes 18. Alternatively, the rim 20 may only extend partially around the central member 16 and the spokes 18.

The rim 20 may include a generally circular shape and a weighted member 28 that at least partially surrounds a perimeter of the rim 20. The weighted member 28 may be formed of a flexible material such as, but not limited to, a braided, steel cable. While the weighted member 28 may be formed of any material that adequately increases the polar moment of inertia of the steering wheel 10 as described below, the weighted member 28 will be described hereinafter and shown in the drawings as a braided cable 28.

The braided cable 28 may be positioned proximate the rim 20 of the steering wheel 10 generally on a rear surface 30 that opposes an occupant of the motor vehicle 12. Alternatively, the braided cable 20 may be located on a front surface 32 of the rim 20 that is generally formed on an opposite side of the rim 20 from surface 30. The cable 28 may completely surround a perimeter of the rim 20, may only partially surround the rim 20, or may include individual segments disposed at predetermined locations around the perimeter of the rim 20.

In any configuration, because the braided cable 28 is constructed of a plurality of individual strands 31, the cable 28 is relatively flexible along its length. The flexibility of the cable 28 allows the cable 28 to move in a direction generally perpendicular to surfaces 30, 32 and therefore does not significantly affect the bending stiffness of the rim 20. Explaining further, the cable 28 is relatively flexible in a direction generally parallel to a plane defined by the perimeter of the rim 20.

The braided cable 28 may be received within a groove 34 formed in the rim 20. The groove 34 may include a shape that matingly receives the cable 28 such that a width of the groove 34 is approximately equal to a diameter of the cable 28. The groove 34 may be cast into the shape of the rim 20 or, alternatively, may be machined into the rim 20 subsequent to formation of the rim 20.

Positioning of the cable 28 proximate the rim 20 increases the polar moment of inertia of the steering wheel 10 and, as such, reduces vibration of the steering wheel 10 during operation of the vehicle 12. The polar moment of inertia is generally defined as a measure of a beam's ability to resist torsion. In the present application, providing the steering wheel 10 with a high polar moment of inertia reduces the willingness of the steering wheel 10 to change direction and, thus, helps prevent movement of the rim 20 otherwise caused by vibrational forces applied thereto. Because the steering wheel 10 includes a generally circular shape, positioning the cable 28 at the greatest possible radius (i.e., around the outer perimeter of the rim 20) achieves the greatest polar moment of inertia as the weight (i.e., cable 28) is located the greatest distance from a central axis of rotation X of the steering wheel 10.

In one application, the cable 28 may be a steel braided cable. Any weighted cable will serve to reduce at least some vibration in accordance with the present disclosure. For a steering wheel having a diameter of 380 mm, the cable preferably has a weight of at least approximately 100 grams and more preferably has a weight of at least approximately 200 grams.

The rim 20 may include a retention device that fixedly attaches the cable 28 to either or both of surfaces 30, 32. The retention device may be integrally or otherwise formed with the groove 34 and may include a pair of arms 38 that extend from a bottom portion 40 of the groove 34 to provide the rim 20 will a cross-section that includes a generally U-shape. The arms 38 may be configured to receive the cable 28 such that the cable 28 is snap-fit into the groove 34 and held therein by the arms 38. The arms 38 may restrict removal of the cable 28 from the groove 34 and ensure proper placement of the cable 28 relative to the rim 20 during manufacturing. While the retention device is illustrated as including a pair of arms 38 that cooperate with a bottom portion 40 of a groove 34 to prevent removal of the cable 28 from the groove 34, the retention device may alternatively or additionally include tape or a mechanical fastener such as a threaded bolt or weld to restrict removal of the cable 28 from the groove 34. Such additional fasteners may further increase the polar moment of inertia and may therefore improve the performance of the steering wheel 10.

During manufacturing, the cable 28 may be held in place on the rim 20 by a removable fastener 42. The removable fastener 42 holds the cable 28 in a predetermined location around the perimeter of the rim 20 prior to application of an overcoat material 44 that fixedly attaches the cable 28 to the rim 20. The removable fastener 42 may include tape or wire that at least temporarily maintains a position of the cable 28 relative to the rim 20 prior to and during application of an overcoat material 44 to the rim 20 and cable 28. The overcoat material 44 may be any suitable material that attaches the cable 28 to the rim 20 and at least temporarily maintains a position of the cable 28 relative to the rim 20, such as, but not limited to, molded foam or polyurethane. The overcoat material 44 may encapsulate the rim 20 and the cable 28.

As described, the cable 28 increases the polar moment of inertia of the steering wheel 10 and helps reduce movement of the steering wheel 10 when subjected to vibrational forces. Because the cable 28 is not cast integrally with the rim 20, but rather, is added to a surface or surfaces 30, 32 of the rim 20, the weight, size, location, and shape of the cable 28 may all be tuned during design of the steering wheel 10 to improve the performance of the steering wheel 10 without requiring modifications to the rim 20. Preventing such modifications to the rim 20 prevents modifications to associated tooling used to manufacture the rim 20 and, therefore, reduces the overall cost and complexity associated with designing and manufacturing the steering wheel 10.

While specific examples have been described in the specification and illustrated in the drawings, it will be understood by those skilled in the art that various changes may be made and equivalence may be substituted for elements thereof without departing from the scope of the present teachings as defined in the claims.

## Claims

1. A steering wheel (10) for a vehicle (12) comprising:
a rim (20) defining a perimeter of the steering wheel (10); and
a weighted member (28) positioned proximate to and at least partially surrounding the rim (20);
wherein the weighted member (28) increases the polar moment of inertia of the steering wheel (10);
**characterised in that** the weighted member (28) is flexible in a direction generally perpendicular to a plane defined by the perimeter of the steering wheel (10).

2. The steering wheel of Claim 1, wherein the rim (20) defines a groove (34) that matingly receives the weighted member (28).

3. The steering wheel of Claim 2, wherein the at least one groove (34) includes a retention feature for retaining the weighted member (28) within the groove.

4. The steering wheel of Claim 2 or Claim 3, wherein the weighted member (28) is snap-fit into the groove.

5. The steering wheel of Claim 1, further comprising a material (44) encapsulating the rim (20) and the weighted member (28).

6. The steering wheel of any preceding claim, wherein the weighted member (28) is a cable.

7. The steering wheel of Claim 6, wherein the cable is a braided, steel cable.

8. The steering wheel of any preceding claim, wherein the rim (20) includes a front side (32) and a rear side (30), the weighted member (28) being positioned adjacent the rear side.

9. The steering wheel of any preceding claim wherein the weighted member (28) substantially surrounds the rim (20).

## Patentansprüche

1. Lenkrad (10) für ein Fahrzeug (12), das Folgendes umfasst:
einen Radkranz (20), der einen Umfang des Lenkrads (10) definiert; und
ein gewichtetes Element (28), das nahe dem Radkranz (20) angeordnet ist und diesen zumindest teilweise umgibt;
wobei das gewichtete Element (28) das polare Trägheitsmoment des Lenkrads (10) erhöht;
**dadurch gekennzeichnet, dass** das gewichtete Element (28) in einer Richtung, die im Allgemeinen im rechten Winkel auf eine durch den Umfang des Lenkrads (10) definierten Ebene steht, flexibel ist.

2. Lenkrad nach Anspruch 1, worin der Radkranz (20) eine Vertiefung (34) definiert, die das gewichtete Element (28) ineinandergreifend aufnimmt.

3. Lenkrad nach Anspruch 2, worin die zumindest eine Vertiefung (34) ein Halteelement umfasst, um das gewichtete Element (28) in der Vertiefung zu halten.

4. Lenkrad nach Anspruch 2 oder 3, worin das gewichtete Element (28) in die Vertiefung einschnappt.

5. Lenkrad nach Anspruch 1, ferner umfassend ein Material (44), das den Radkranz (20) und das gewichtete Element (28) ummantelt.

6. Lenkrad nach einem der vorangegangenen Ansprüche, worin das gewichtete Element (28) ein Kabel ist.

7. Lenkrad nach Anspruch 6, worin das Kabel ein geflochtenes Stahlkabel ist.

8. Lenkrad nach einem der vorangegangenen Ansprüche, worin der Radkranz (20) eine Vorderseite (32) und eine Rückseite (30) umfasst, wobei das gewichtete Element (28) in Bezug auf die Rückseite benachbart angeordnet ist.

9. Lenkrad nach einem der vorangegangenen Ansprüche, worin das gewichtete Element (28) den Radkranz (20) im Wesentlichen umgibt.

## Revendications

1. Volant de direction (10) pour un véhicule (12) comprenant:
une jante (20) définissant un périmètre du volant de direction (10); et
un élément lesté (28) positionné à proximité de et entourant au moins partiellement la jante (20);
où l'élément lesté (28) augmente le couple polaire d'inertie du volant de direction (10);
**caractérisé en ce que** l'élément lesté (28) est flexible dans une direction généralement perpendiculaire à un plan défini par le périmètre du volant de direction (10).

2. Volant de direction selon la revendication 1, où la jante (20) définit une rainure (34) qui reçoit d'une manière correspondante l'élément lesté (28).

3. Volant de direction selon la revendication 2, où la au moins une rainure (34) comporte une caractéristique de retenue pour retenir l'élément lesté (28) dans la rainure.

4. Volant de direction selon la revendication 2 ou la revendication 3, où l'élément lesté (28) est enclenché dans la rainure.

5. Volant de direction selon la revendication 1, comprenant en outre un matériau (44) encapsulant la jante (20) et l'élément lesté (28).

6. Volant de direction selon l'une quelconque des revendications précédentes, où l'élément lesté (28) est un câble.

7. Volant de direction selon la revendication 6, où le câble est un câble d'acier tressé.

8. Volant de direction selon l'une quelconque des revendications précédentes, où la jante (20) comporte un côté avant (32) et un côté arrière (30), l'élément lesté (28) étant positionné d'une manière adjacente au côté arrière.

9. Volant de direction selon l'une quelconque des revendications précédentes, où l'élément lesté (28) entoure sensiblement la jante (20).
